Europäisches Patentamt

European Patent Office

Office européen des brevets

(11) Veröffentlichungsnummer: **0 219 105 B1**

# EUROPÄISCHE PATENTSCHRIFT

(45) Veröffentlichungstag der Patentschrift:
06.02.91 Patentblatt 91/06

(51) Int. Cl.$^5$: **B29B 7/76**

(21) Anmeldenummer: 86114233.9

(22) Anmeldetag: 15.10.86

(54) Verfahren und Vorrichtung zum Herstellen eines chemisch reaktionsfähigen Gemisches aus mindestens zwei Kunststoffkomponenten.

(30) Priorität: 17.10.85 DE 3536930

(43) Veröffentlichungstag der Anmeldung:
22.04.87 Patentblatt 87/17

(45) Bekanntmachung des Hinweises auf die Patenterteilung:
06.02.91 Patentblatt 91/06

(84) Benannte Vertragsstaaten:
BE DE FR GB IT NL SE

(56) Entgegenhaltungen:
DE-A- 2 703 755
DE-A- 2 852 308
DE-A- 3 021 095

(73) Patentinhaber: ELASTOGRAN
POLYURETHANE GMBH
Landwehrweg
D-2844 Lemförde (DE)

(72) Erfinder: Wallner, Josef
Brauneckstrasse 2
D-8150 Holzkirchen (DE)
Erfinder: Schlueter, Klaus
Windeckstrasse 1 C
D-8000 München 70 (DE)
Erfinder: Taubenmann, Peter
Strindbergstrasse 1
D-8000 München 60 (DE)
Erfinder: Endress, Johann
Spalatinstrasse 27
D-8000 München 83 (DE)

(74) Vertreter: Springer, Hans Jörg, Dr. et al
BASF Aktiengesellschaft Patentabteilung
Carl-Bosch-Strasse 38
D-6700 Ludwigshafen (DE)

## Beschreibung

Die Erfindung betrifft ein Verfahren und eine Vorrichtung nach dem Oberbegriff des Anspruches 1 bzw. 2.

Zur Darstellung der Erfindungs-Gattung ist von einer bekannten Vorrichtung im Sinne der DE-C-20 07 935 ausgegangen, mit der fließfähige Reaktionskomponenten während eines vorgegebenen Zeitintervalls in eine Mischkammer eindosiert und miteinander vermischt werden und das Reaktionsgemisch ausgetragen wird. Das Umsteuern von Mischen der Komponenten auf Ausstoßen des Gemisches erfolgt durch einen in der Mischkammer hin- und herbewegbaren Kolben mit Rücklaufnuten. Der Kolben hat außer der Ventil-, Förder- und Rückführungsfunktion auch die Aufgabe, die Mischkammer von Gemischresten zu reinigen. Dabei kann jedoch flüssiges Reaktionsgemisch in den Passungsspalt zwischen Kolben und Mischkammer eindringen und dort ausreagieren. Dieses führt häufig zu Beschädigungen der Vorrichtung.

Weiterhin ist aus der DE-B-3 021 095 ein Verfahren bekannt, das grundsätzlich so arbeitet, wie dasjenige gemäß DE-C-2 007 935. Die entsprechende Vorrichtung ist etwas anders aufgebaut, da sie nicht mit Rücklaufnuten im Kolben ausgerüstet ist.

Durch diese Patentschrift 3 021 095 wird ein Verfahren vorgeschlagen, das sich mit dem Problem des Festklebens des Kolbens in der Reinigungsstellung auseinandersetzt. Zweikomponentenkunststoffe bilden nach der Vermischung der entsprechenden Komponenten sehr gute Klebstoffe. Hierdurch neigen die entsprechenden Mischvorrichtungen zum Verkleben, d.h. der Kolben klebt an der Mischkammerwand fest. Die DE-B- 3 021 095 schlägt nun vor, dieses Problem durch ein häufiges Hin- und Herbewegen des Kolbens zu lösen. Hierdurch soll der Klebefilm zerstört werden, bevor er vollständig ausgehärtet ist und seine volle Klebekraft entfaltet hat.

Bei einer Vorrichtung, die so aufgebaut ist, wie in dem Oberbegriff des Anspruches 2 definiert, ist zusätzlich zu dem Kolben noch ein Drosselorgan quer in die Mischkammer einfahrbar, um auf die Gemischbildung in bestimmter Weise Einfluß zu nehmen. Der Kolben dieser bekannten Vorrichtung (DE -A- 3 331 731) nimmt zwischen der Mischstellung und der Reinigungsstellung eine Zwischenstellung ein, damit ausreichend Zeit zur Verfügung steht, daß das Drosselogan aus dem Weg des Kolbens bei seiner Bewegung in die Reinigungsstellung herausgefahren wird. In anderen Worten, die Zwischenstellung wird eingenommen, um einen "Zusammenstoß" zwischen Kolben und Drosselorgan zu verhindern.

Der Erfindung liegt nun die Aufgabe zugrunde, ein Verfahren und eine Vorrichtung der eingangs genannten Art zu schaffen und dabei eine nachteilige Verzögerung der Kolbenbewegung aus der Reinigungsstellung in die Mischstellung durch Festkleben zu unterbinden.

Diese Aufgabe wird durch das Kennzeichen des Anspruches 1 bzw. des Anspruches 2 gelöst.

Die Erfindung geht einen anderen Weg als der Stand der Technik nach der DE-B- 3 021 095, da sie nicht nach Art einer Luftpumpe eine häufige Hin- und Herbewegung des Kolbens vorschlägt, sondern den Kolben in eine Verfahren und Vorrichtung zum Herstellen eines chemisch reaktionsfähigen Gemisches aus mindestens zwei Kunststoffkomponenten Wartestellung hochfährt, in der die Flächen zwischen Kolbenende und Mischkammerwandung, in denen Mischungsreste für eine Verklebung sorgen können, nur noch sehr klein sind. Da die Klebkraft von der Flächengröße abhängig ist, ist diese Kraft dann so gering, daß sie die Kolbenbewegung bei Auslösen des Signals für die nächste Mischung nicht mehr nennenswert behindern kann.

Die Mischkammer, d.h. der zylindrische Abschnitt, durch den sich der Kolben aus der Mischstellung in die Reinigungsstellung bewegt, kann verhältnismäßig lang ausgebildet sein, so daß eine große Mischkammer zur Verfügung steht, die auf den austretenden Gemischstrahl beruhigend wirkt. Diese große und lange Mischkammer bedingt eine verhältnismäßig große "Überschneidungsfläche" zwischen Kolben und Zylinderwand. Diese große Fläch würde bei einer entsprechenden Verweilzeit eine entsprechend große Klebekraft zur Folge haben. Da der Kolben aber nach Durchführung des Reinigungshubes möglichst schnell in die Wartestellung gefahren wird und somit einen großen Teil der "Überschneidungsfläche" wieder freigibt, ist die Klebekraft, die die Kolbenbewegung dann noch behindern kann, entsprechend gering. Erfindungsgemäß wird also nicht nur das Problem des Blockierens durch ein Verkleben gelöst, sondern es wird auch gleichzeitig die Möglichkeit geschaffen, eine große und lange Mischkammer zur Verfügung zu stellen, um für einen beruhigten Austritt der Mischung zu sorgen. Es besteht nicht mehr die Gefahr, daß diese große und lange Mischkammer die Gefahr eines Festklebens erhöht. Wenn das entsprechende Signal für den nächsten Mischvorgang (nächster Schuß) gegeben wird, muß nur noch ein sehr kurzer Weg zurückgelegt werden, damit dieser Mischvorgang beginnen kann.

Im folgenden wird die Erfindung unter Hinweis auf die Zeichnung anhand eines Ausführungsbeispieles näher erläutert.

Es zeigt :

Fig. 1 einen Längsschnitt durch eine schematische Darstellung eines Mischkopfes in der Reinigungsstellung ;

Fig. 2 einen der Fig. 1 entsprechenden Schnitt, jedoch in der Wartestellung ; und

Fig. 3 einen den Fig. 1 und 2 entsprechenden Schnitt, jedoch in der Mischstellung.

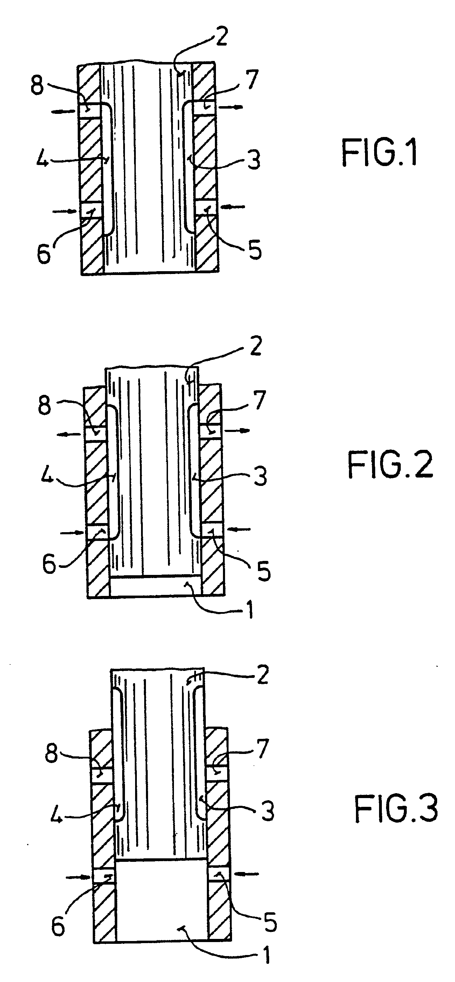

Der in der Zeichnung dargestellte Mischkopf weist einen Kolben 2 auf, der zwischen einer Reinigungsstellung (Fig. 1) und einer Mischstellung (Fig. 3) hin- und herbewegbar ist. In der Mischstellung wird die Mischkammer 1 freigegeben.

In dem Kolben 2 sind Rücklaufnuten 3 und 4 ausgebildet, die Eintrittsöffnungen 5 und 6 mit Rücklauföffnungen 7 und 8 verbinden.

Nicht gezeigt ist der hydraulische Antrieb für den Kolben 2, da dieser bekannt ist. Auch nicht gezeigt sind Vorratsbehälter für jede Komponente, von denen Zuleitungen zu den Eintrittsöffnungen 5 und 6 und Rücklaufleitungen zu den Rücklauföffnungen 7 und 8 führen. Weiterhin sind Dosierpumpen vorgesehen.

Nach Durchführung eines Mischvorganges (Schusses) wird der Kolben in die Reinigungsstellung nach Fig. 1 gefahren. Hierbei schiebt er die Gemischreste aus der Mischkammer 1 aus. Der Eintritt der Komponenten durch die Eintrittsöffnungen 5 und 6 wird unterbrochen. Die Komponenten strömen dann durch die Rücklaufnuten 3 und 4 zu den Rücklauföffnungen 7 und 8 und damit zurück zu dem jeweiligen Vorratsbehälter.

Wenn der Reinigungshub durchgeführt ist, wird der Kolben 2 in die Stellung nach Fig. 2 hochgefahren, d.h. er nimmt eine Wartestellung ein. In dieser Wartestellung sind die Eintrittsöffnungen 5 und 6 nach wie vor über die Rücklaufnuten 3 und 4 mit den Rücklauföffnungen 7 und 8 verbunden, so daß die Komponenten, ohne daß sie aufeinandertreffen, rezirkulieren können. Ein wesentlicher Teil der Mischkammer wird nicht mehr von dem Kolben eingenommen. Es liegt eine verhältnismäßig geringe "Überschneidungsfläche" zwischen Mischkammerwandung und Kolbenmantelfläche vor, so daß die entsprechende verbleibende Klebekraft gering ist.

Wenn dann das Signal für die nächste Mischung ausgelöst wird, kann der Kolben 2 schnell und ohne nennenswerte Behinderung in die Mischstellung nach Fig. 3 gefahren werden. Wenn der entsprechende Mischvorgang beendet ist, wird der Kolben zur Durchführung des Reinigungshubes wieder in die Reinigungsstellung nach Fig. 1 gefahren.

Die Zeichnung ist lediglich eine schematische Darstellung. Die Mischkammer 1 kann im Verhältnis zu der "Überschneidungsfläche", die in der Wartestellung (Fig. 2) noch vorhanden ist, sehr viel länger ausgebildet sein. Hierdurch steht eine lange Wegstrecke für das Gemisch zur Verfügung, auf der die Strömung sich beruhigen kann und so ein ruhiger Austritt ermöglicht wird.

Zeichn.

## Ansprüche

1. Verfahren zum Herstellung eines chemisch reaktionsfähigen Gemisches aus mindestens zwei Kunststoffkomponenten, vorzugsweise Polyurethan, wobei während eines vorgegebenen Zeitintervalls (Schuß) die Reaktionskomponenten kontinuierlich in eine Mischkammer eines Mischkopfes eindosiert und miteinander vermischt werden, und das Reaktionsgemisch aus der Mischkammer ausgetragen und nach Beendigung des Mischvorganges der in der Mischkammer verbleibende Gemischrest mittels eines Reingiungshubes eines mit Rücklaufnuten versehenen Kolbens ausgestoßen wird, dadurch gekennzeichnet, daß der Kolben (2) nach Durchführung des Reinigungshubes vor Beginn des nächsten Mischvorganges in eine Wartestellung hochgefahren wird, in der die Rücklaufnuten (3, 4) noch mit den Eintrittsöffnungen (5, 6) verbunden sind.

2. Vorrichtung zum Herstellen eines chemisch reaktionsfähigen Gemisches aus mindestens zwei Kunststoffkomponenten, vorzugsweise Polyurethan, bestehend aus Vorratsbehältern für jede Komponente, von denen Zuleitungen über Dosierpumpen zu einem Mischkopf führen, in dessen Mischkammer die Zuleitungen über Eintrittsöffnungen einmünden, wobei in der Mischkammer ein Kolben durch einen hydraulischen Antrieb zwischen einer Reinigungs- und einer Mischstellung hin- und herbewegbar ist, der mit Rücklaufnuten versehen ist, die in der Reinigungsstellung die Eintrittsöffnungen mit Rücklauföffnungen verbinden, die über Rücklaufleitungen mit dem zugehörigen Vorratsbehälter verbunden sind, dadurch gekennzeichnet, daß die Bewegung des durch den hydraulischen Antrieb gesteuerten Kolbens (2) zwischen der Reinigungsstellung (Fig. 1) und der Mischstellung (Fig. 3) in einer Wartestellung (Fig. 2) unterbrechbar ist, in der die Rücklaufnuten (3, 4) die Eintrittsöffnungen (5, 6) noch mit den Rücklauföffnungen (7, 8) verbinden.

## Claims

1. A process for preparing a chemically reactive mixture from two or more polymer components, preferably polyurethane, in which the reaction components are metered continuously into a mixing chamber of a mixing head and mixed with one another for a prespecified time (shot), and the reaction mixture is discharged from the mixing chamber and, after completion of the mixing operation, the mixture remaining in the mixing chamber is ejected by a cleaning stroke of a piston provided with return grooves, wherein the piston (2), after carrying out the cleaning stroke and before the next mixing operation is commenced, is moved up into a hold position, in which the return grooves (3, 4) are still connected to the inlet apertures (5, 6).

2. An apparatus for preparing a chemically reactive mixture of two or more polymer components, preferably polyurethane, comprising storage tanks for each component, from which supply lines lead via metering pumps to a mixing chamber, into the mixing chamber of which the supply lines run via inlet apertures, a piston being movable, by means of a hydraulic drive, in the mixing chamber between a cleaning position and a mixing position and being provided with return grooves which, in the cleaning position, connect the inlet apertures to return apertures, which are connected to the respective storage tank via return lines, wherein the movement of the hydraulically controlled piston (2) between the cleaning position (Fig. 1) and the mixing position (Fig. 3) can be interrupted at a hold position (Fig. 2), in which the return grooves (3, 4) still connect the inlet apertures (5, 6) to the return apertures (7, 8).

## Revendications

1. Procédé de préparation d'un mélange chimiquement réactif d'au moins deux composants en matière plastique, de préférence polyuréthane, avec lequel, pendant un intervalle donné (cadence de production), les composants de réaction sont introduits en continu dans la chambre de mélange d'un broyeur et sont mélangés entre eux, et le mélange réactionnel est évacué de la chambre de mélange et une fois le processus de mélange terminé, le reste du mélange subsistant dans la chambre de mélange est éjecté par une course de nettoyage d'un piston pourvu de rainures de retour, caractérisé par le fait que le piston (2), après la course de nettoyage et avant le début du processus de mélange suivant, est amené dans une position d'attente dans laquelle les rainures de retour (3, 4) sont encore reliées aux orifices d'entrée (5, 6).

2. Dispositif de préparation d'un mélange chimiquement réactif d'au moins deux composants en matière plastique, de préférence polyuréthane, comprenant des réservoirs pour chaque composant, à partir desquels des tubes d'arrivée mènent, par l'intermédiaire de pompes de dosage, à un broyeur dont la chambre de mélange présente des orifices d'entrée où débouchent les tubes d'arrivée, un piston pouvant être animé, dans la chambre de mélange, entre une position de nettoyage et une position de mélange, d'un mouvement de va-et-vient par une commande hydraulique, piston qui est muni de rainures de retour lesquelles, en position de nettoyage, relient les orifices d'entrée à des orifices de retour qui, par l'intermédiaire de conduites de retour, sont reliés au réservoir respectif, ce dispositif étant caractérisé par le fait que le mouvement du piston actionné par la commande hydraulique peut être interrompu, entre la position de nettoyage et la position de mélange, par une position d'attente dans laquelle les rainures de retour relient encore les orifices d'entrée aux orifices de retour.

FIG.1

FIG.2

FIG.3